Europäisches Patentamt

European Patent Office

Office européen des brevets

(11) Veröffentlichungsnummer : **0 058 811**
**B1**

# EUROPÄISCHE PATENTSCHRIFT

(45) Veröffentlichungstag der Patentschrift :
15.08.84

(21) Anmeldenummer : 81810062.0

(22) Anmeldetag : 25.02.81

(51) Int. Cl.³ : **F 16 J 15/10, F 16 L 23/00**

(54) **Verbindungsteil mit Dichtungsring.**

(43) Veröffentlichungstag der Anmeldung :
01.09.82 Patentblatt 82/35

(45) Bekanntmachung des Hinweises auf die Patenterteilung : 15.08.84 Patentblatt 84/33

(84) Benannte Vertragsstaaten :
AT BE CH DE FR GB IT LI LU NL SE

(56) Entgegenhaltungen :
EP-A- 0 022 293
US-A- 2 717 793
MACHINE DESIGN (Seals reference issue) 9. März 1967, Cleveland, Ohio, US Kapitel 11 "Static O-ring seals", Seiten 65-67
PRODUCT ENGINEERING, Band 37, Nr. 3, 31. Januar 1966, New York, US H.S. TURNER "For sealed joints, try these gaskets for high vacuum", Seiten 62-66
LE VIDEO, LES COUCHES MINCES, Nr. 197, 1979, Paris, FR B.L. BLANC et al. "Technologie de l'étanchéité", Seiten 217-244
Hydraulic Handbook, 7th Edition, Trade and Technical Press Ltd. 1979, Morden Surrey SM4 5EW, England Seite 334

(73) Patentinhaber : **Baumgartner, Merzia**
**Wiesenstrasse 23**
**CH-5605 Dottikon (Kanton Aargau) (CH)**

(72) Erfinder : **Andreolla, Florian**
**Wiesenstrasse 23**
**CH-5605 Dottikon (Kanton Aargau) (CH)**

(74) Vertreter : **Bovard, Fritz Albert et al**
**Bovard & Cie Patentanwälte VSP Optingenstrasse 16**
**CH-3000 Bern 25 (CH)**

## Beschreibung

Die Erfindung geht aus von einem flansch- oder schraubenförmigen Verbindungsteil mit einer Auflagefläche, die eine ringförmige Nut mit einem im Querschnitt kreisförmigen oder flachen Bodengrund aufweist, in welcher Nut ein elastisch nachgiebiger Dichtungsring angeordnet ist, dessen zwanzig bis fünfunddreissig Volumenprozente über die Auflagefläche vorstehen, wobei der Durchmesser bzw. die Breite und Tiefe der Nut so bemessen sind, dass der Dichtungsring in seinem unbelasteten Zustand der Form der Nut entspricht und von der Nutenwand bzw. den Nutenwänden grösstenteils dicht umschlossen ist. Siehe EP-A-0 022 293.

Ein solcher Verbindungsteil wird mit einem anderen Verbindungsteil verbunden, um eine dichte Verbindung von Apparaten, Behältern oder anderen Vorrichtungen unter sich oder mittels Leitungen oder den Verschluss von Apparaten, Behältern oder anderen Vorrichtungen oder Leitungen zu erzielen, wodurch das Ein- oder Ausdringen von Medien aller Art verhindert wird.

Es ist bekannt, zwischen zwei Verbindungsteile elastisch nachgiebige Dichtungsringe einzubringen. Die bis heute bekannten Konstruktionen einer solchen Verbindung haben verschiedene Nachteile, die in drei Gruppen gegliedert werden können.

In der ersten Gruppe werden die elastisch nachgiebigen Dichtungsringe in einen zu kleinen Raum von ringförmigen Nuten gepresst. Dadurch wird das Dichtungsmaterial übermässig beansprucht und schlussendlich zerstört. Eine Wiederverwendung des einmal verwendeten Dichtungsringes ist ausgeschlossen, wenn die Verbindung zweier Verbindungsteile einmal getrennt worden ist.

Solche Konstruktionen sind aus den folgenden Druckschriften bekannt :
CH-PS 461 593 ; CH-PS 538 205 ; DE-PS 1 640 968 ; DE-PS 2 047 027 ; DE-PS 2 132 951 ; AT-PS 320 782 ; US-PS 1 368 196 und US-PS 3 719 202.

In der zweiten Gruppe werden die elastisch nachgiebigen Dichtungsringe in einen zu grossen Raum von ringförmigen Nuten untergebracht. Dadurch sollen die Nachteile der ersten Gruppe vermieden werden. In diesem Fall wird aber nur der Querschnitt des elastisch nachgiebigen Dichtungsringes einer Formveränderung unterzogen. Das Bestreben des Dichtungsmaterials, nach Möglichkeit seine unverformte ursprüngliche Form beizubehalten, reicht in vielen Fällen nur ungenügend aus, um Medien aller Art am Ein- oder Ausdringen zu hindern. Wird in solchen Fällen die Querschnittsform des Dichtungsringes auch nur geringfügig über das zulässige Mass hinaus verformt, zeigt sich vorerst eine befriedigende Dichtwirkung. Später tritt aber eine vorzeitige Alterung des Dichtungsmaterials auf, wodurch sein Molekularaufbau zerstört wird. Die Fadenmoleküle des dichtungsmaterials reissen oder die Vernetzungspunkte der Fadenmoleküle werden unter sich abgerissen. Dadurch wird die Kraft, welche zur Zurückgewinnung der unverformten Querschnittsform strebt, geschwächt und die Dichtwirkung gefährdet oder sogar aufgehoben.

Solche Konstruktionen sind aus den folgenden Druckschriften bekannt :
CH-PS 428 881 ; DE-Gm 72 30 680 ; US-PS 3 499 670 und US-PS 4 090 029.

In die dritte Gruppe gehören für Dichtungsringe ungünstig gestaltete Räume von ringförmigen Nuten. Durch Walk- und Knetbewegungen, welche bei der Montage und während der Verformung wirksam werden, entstehen ähnliche Schäden wie bei der ersten und zweiten Gruppe, zusätzlich werden noch die Dichtungsringe öfters durch schneidende Grate und Kanten verletzt und zerstört. Als Beispiel dazu steht die internationale Norm ISO/DIS 6149 und die DE-PS 16 40 968 sowie die eingangs erwähnte EP-A-0 022 293.

Verschiedene bekannte Konstruktionen sind sogar als Kombinationen dieser Gruppen einzuordnen.

In der Zeitschrift « Machine Design » vom 9.3.1967 sind Nuten für O-Dichtungsringe beschrieben, deren Nutengrund flach oder abgerundet ist. Der O-Dichtungsring, der in einer Nut mit abgerundetem Grund eingesetzt ist, ist von der Nutenwand dicht umschlossen, weil der Durchmesser des Nutengrundes im Querschnitt dem tatsächlichen Querschnitt des O-Dichtungsringes entspricht. Der O-Dichtungsring streckt sich um eine Länge von 1/64 bis 1/32 Zoll (0,4 bis 0,8 mm) über die Auflagefläche des Flansches.

Die Nut zur Aufnahme des O-Dichtungsringes ist im Querschnitt nicht U-förmig, weil sie den O-Dichtungsring mit der Ausnahme seines ausragenden Teiles dicht umschliesst. Somit entstehen zwischen den zur Auflagefläche hin auslaufenden Endwandabschnitten der Nut und dem O-Dichtungsring keine Freiräume. Bei der Belastung des in der Nut eingelegten O-Dichtungsringes kann derselbe durch die Kanten der Nut beschädigt werden.

In der Zeitschrift « Product Engineering » vom 31.1.1966 ist ein Flansch mit einer Nut beschrieben deren Nutengrund flach ausgebildet ist. Der optimale Teil des Dichtungsringes, der über die Auflagefläche des Flansches vorsteht, beträgt etwa 20 % des Gesamtvolumens des Dichtungsringes.

Die bei den zur Auflagefläche hin auslaufenden Endwandabschnitte der Nut verlaufen im Querschnitt auch hier nicht zueinander parallel. Der Dichtungsring ist in diesem Falle nicht von der Nutenwand grösstenteils dicht umschlossen ; von der Nutenwand ist weniger als die Hälfte des Dichtungsringes dicht umschlossen.

In diesem Fall wird der Dichtungsring bei Belastung durch die auf ihn wirkenden Kräfte nur in seinem Querschnitt deformiert.

In den beiden obenerwähnten Fällen führt die Deformierung des Dichtungsringes zu seiner beschleunigten Alterung.

Der im Anspruch 1 angegebenen Erfindung liegt die Aufgabe zugrunde, die ringförmige Nut zur Aufnahme eines Dichtungsringes so zu gestalten, dass die auf den Dichtungsring wirkenden verformenden Kräfte weniger den Querschnitt des Dichtungsringes zu deformieren als vielmehr dessen Molekularaufbau zu verdichten vermögen. Durch die Formgebung der ringförmigen Nut soll weiter der Verdichtungsgrad des in der Nut angeordneten Dichtungsringes vorgewählt werden können.

Diese Aufgaben werden bei einem flanschoder schraubenförmigen Verbindungsteil nach dem kennzeichnenden Teil des Anspruches 1 gelöst.

Der Erfindungsgegenstand wird nachstehend anhand der Zeichnungen beispielsweise näher erläutert. Es zeigen

Figur 1 einen Querschnitt eines flanschförmigen Verbindungsteils mit einer von seiner Auflagefläche her eingearbeiteten ringförmigen Nut, in welcher ein sich in einem unverformten Zustand befindlicher O-Dichtungsring eingelegt ist und

Figur 2 einen Querschnitt eines flanschförmigen Verbindungsteiles mit einer von seiner Auflagefläche her eingearbeiteten ringförmigen Nut, in welcher ein sich in unverformtem Zustand befindlicher Dichtungsring eines mehrkantigen Querschnittes eingelegt ist.

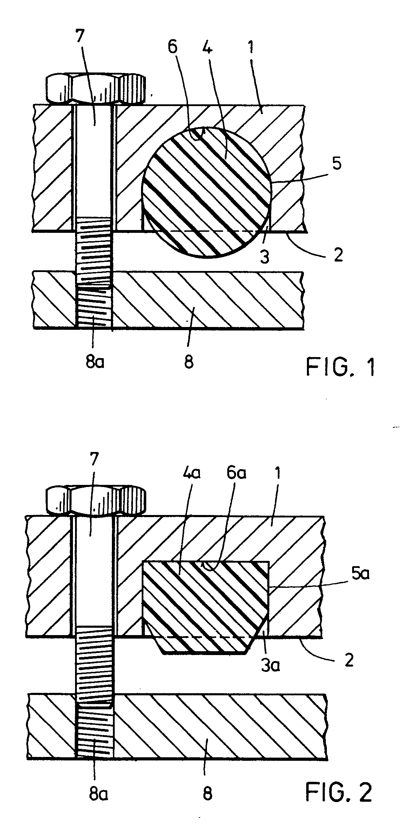

Die in der Fig. 1 dargestellte, in den Verbindungsteil 1 von Seite seiner Auflagefläche 2 eingearbeitete, in sich geschlossene, ringförmige Nut 3 weist einen im wesentlichen U-förmigen Querschnitt auf. Der Nutengrund 6 ist kreisbogenförmig gestaltet, wobei die beiden, parallel zueinander verlaufenden Schenkel ohne Uebergangsspuren in denselben übergehen. Der Radius des kreisbogenförmigen Nutengrundes 6 entspricht genau jenem des eingelegten O-Dichtungsringes 4. Der Durchmesser bzw. die Breite der ringförmigen Nut 3 ist so bemessen, dass der Dichtungsring 4 im unbeanspruchten Zustand von der Nutenwand 5 grösstenteils dicht umschlossen ist. Das aus der ringförmigen Nut 3 über die Auflagefläche 2 vorstehende Segment des O-Dichtungsringes 4 beträgt etwa 25 bis 30 % des Gesamtvolumens dieses Dichtungsringes. Mit den auf der Auflagefläche 2 auslaufenden Schenkeln der Nut 3 bildet der O-Dichtungsring 4 zwei Freiräume.

Durch das Eindrehen der Schrauben 7 in die Gewindebohrungen 8a des zweiten mit dem ersten Verbindungsteil 1 zu verbindenden Verbindungsteiles 8 werden die beiden Teile 1, 8 einander angenähert, wobei das vorstehende Segment des O-Dichtungsringes 4 teilweise verformt wird. Ein geringer Teil des Segmentes wird dabei in die beiden Freiräume verdrängt. Beim weiteren Anziehen der Schrauben 7, bis die beiden Teile 1, 8 zum festen Anliegen aneinander kommen, wird die Molekularstruktur des Materiales des Dichtungsringes 4 verdichtet. Durch diese Massnahme wird jegliche Verdrängung des Dichtungsmaterials in unerwünschter Richtung, in welcher er zerstört würde, vermieden.

Bei dieser Verdichtung der Molekularstruktur des Dichtungsmaterials werden bessere und zuverlässigere Dichtwirkungen erzielt, als es bei einer Deformierung der Querschnittsform des Dichtungsmaterials ist. Da bei der Zusammendrängung der Fadenmoleküle diese kürzere Distanzen zurückzulegen haben, besteht hier nur eine sehr geringe Gefahr, dass Vernetzungspunkte voneinandergetrennt würden oder dass die Fadenmoleküle selber zerreissen ; somit erscheint, dass diese Dichtwirkung nicht durch vorzeitige Alterung des Dichtungsmaterials gefährdet wird.

Das feste Aufliegen der Verbindungsteile 1, 8 an deren Flächen bewirkt einen spürbaren Widerstand beim Eindrehen der Schrauben 7, womit eine fachgerechte Montage gesichert ist. Eine weitere Quetschung des Dichtungsmaterials als bis zum vorgewählten Verdichtungsgrad ist durch das feste Aufliegen der beiden Teile 1, 8 aufeinander verunmöglicht.

Die in der Fig. 2 dargestellte Ausführungsform hat die gleiche Funktion und die gleiche Wirkung wie diejenige der Fig. 1. Lediglich unterscheidet sich diese Ausführungsform dadurch, dass der Querschnitt der ringförmigen Nut 3a gemäss dem eingelegten Dichtungsring 4a mehrkantig ist. Der Nutengrund 6a ist hier flach ausgeführt, was der Formgebung des Dichtungsringes 4a entspricht. Auch hier ist der im Querschnitt mehrkantige Dichtungsring 4a von den Nutenwänden 5a grösstenteils dicht umschlossen. Die der Auflagefläche zulaufenden Schenkel des Dichtungsringes 4a sind zueinander geneigt, so dass in diesem Bereich zwischen dem Dichtungsring 4a und den Nutwänden 5a zwei Freiräume entstehen. Der über die Auflagefläche 2 vorstehende Teil des Dichtungsringes 4a kann 20 bis 35 Prozent des Gesamtvolumens des Dichtungsringes 4a betragen.

Die Tiefe der ringförmigen Nut 3, 3a ist so zu wählen, dass der über die Auflagefläche 2 vorstehende Teil des Dichtungsringes 4, 4a dem optimalen Verdichtungsrad des zur Verwendung kommenden Dichtungsmaterials entspricht. Für üblicherweise im Handel erhältliche Dichtungsringe gewöhnlicher Qualität wird das Volumen des über die Auflagefläche 2 vorstehenden Teiles etwa 25 bis 33 % des Gesamtvolumens des Dichtungsringes ausmachen ; somit wird eine einwandfreie, zuverlässige und dichte Verbindung erzielt.

Anstelle des Einlegens von üblichen Dichtungsringen in die ringförmige Nut kann ein Dichtungsring mittels eines für diesen Zweck konstruierten Spritzwerkzeuges aus plastifizierten Dichtungsmaterialien in die ringförmige Nut eingespritzt werden.

Die oben beschriebenen Massnahmen können auch bei schraubenförmigen Verbindungsteilen angewendet werden.

Der in der oben beschriebenen ringförmigen Nut angeordnete Dichtungsring gewährleistet eine zuverlässige Abdichtung der Verbindung gegen ein- oder ausdringende Medien aller Art. Der Dichtungsring wird in der derart gestalteten Nut fixiert und während der Aufbewahrung, Montage und Demontage keiner Lageveränderung unterworfen. Auch das Ausweichen eines Teiles des Dichtungsringes ist verunmöglicht, so dass keine Verletzung oder vorzeitige Alterung eintritt. Weil die Verformungskräfte weitgehend zur Molekularverdichtung des Materials zwangsweise gerichtet werden, können die verbundenen Teile, ohne dass der Dichtungsring ersetzt werden muss, nötigenfalls demontiert und erneut montiert werden. Die Verdichtung des Dichtungsringes ist durch die vorgewählte Tiefe und Form der ringförmigen Nut kontrollierbar. Durch die Wahl der Materialien bei Spritzgiessverfahren können höhere Ansprüche an die Dichtwirkung gestellt werden, weil härtere Dichtmaterialien zur Verfügung stehen als dies für lose Dichtungsringe, die auch dehnbar sind, der Fall ist.

## Anspruch

Flansch- oder schraubenförmiger Verbindungsteil mit einer Auflagefläche (2), die eine ringförmige Nut (3 ; 3a) mit einem im Querschnitt kreisförmigen (6) oder flachen (6a) Bodengrund aufweist, in welcher Nut ein elastisch nachgiebiger Dichtungsring (4 ; 4a) angeordnet ist, dessen zwanzig bis fünfunddreissig Volumenprozente über die Auflagefläche (2) vorstehen, wobei der Durchmesser bzw. die Breite und Tiefe der Nut (3 ; 3a) so bemessen sind, dass der Dichtungsring (4 ; 4a) in seinem unbelasteten Zustand der Form der Nut (3, 3a) entspricht und von der Nutenwand (5) bzw. den Nutenwänden (5a) grösstenteils dicht umschlossen ist, dadurch gekennzeichnet, dass — im Querschnitt gesehen — die beiden zur Auflagefläche (2) hin auslaufenden Wandabschnitte der Nut (3, 3a) zueinander parallel und von dem Dichtungsring (4 ; 4a) im Abstand verlaufen, so dass zwischen den auslaufenden Wandabschnitten und dem Dichtungsring (4, 4a) zwei Freiräume entstehen.

## Claim

Flange- or screw-formed connection part with a bearing surface (2) having an annular groove (3 ; 3a) with a bottom which is circular (6) or flat (6a) in cross-section, in which groove an elastically yielding sealing ring (4 ; 4a) is disposed, twenty to thirty-five percent of which by volume protrudes beyond the bearing surface (2), the diameter or the width and depth of the groove (3 ; 3a) being so dimensioned that the sealing ring (4 ; 4a) in its non-loaded state corresponds to the shape of the groove (3, 3a) and is for the most part closely surrounded by the groove wall (5) or the groove walls (5a), characterized in that — viewed in cross-section — the two wall-sections of the groove (3, 3a) ending towards the bearing surface (2) run parallel to one another and spaced from the sealing ring (4 ; 4a), so that two free spaces are formed between the ending wall-sections and the sealing ring (4, 4a).

## Revendication

Elément de raccord en forme de bride ou de pièce filetée, présentant une surface d'appui (2) et une rainure annulaire (3 ; 3a) dont la section comporte une surface de fond arrondie (6) ou plate (6a), un anneau d'étanchéité (4 ; 4a) élastiquement déformable, et placé dans cette rainure, ayant un volume dont une proportion de vingt à trente-cinq pour cent est proéminente au-dessus de ladite surface d'appui (2), le diamètre ou la largeur ainsi que la profondeur de la rainure (3 ; 3a) étant dimensionnés de manière que l'anneau (4 ; 4a) ait à l'état détendu une forme correspondant à celle de la rainure, et soit étroitement entouré sur sa plus grande partie par la ou les parois (5 ; 5a) de la rainure, caractérisé en ce que les éléments de paroi marginaux de la rainure (3 ; 3a) qui débordent dans la surface d'appui (2) sont parallèles l'un à l'autre et s'étendent à distance de l'anneau d'étanchéité (4 ; 4a) de sorte que, vus en coupe, des espaces libres subsistent entre les éléments de parois marginaux et l'anneau d'étanchéité (4 ; 4a).

FIG. 1

FIG. 2